(19) Europäisches Patentamt
European Patent Office
Office européen des brevets

(11) EP 0 577 002 B1

(12) EUROPÄISCHE PATENTSCHRIFT

(45) Veröffentlichungstag und Bekanntmachung des Hinweises auf die Patenterteilung:
**04.12.1996 Patentblatt 1996/49**

(51) Int Cl.[6]: **C08F 8/32**

(21) Anmeldenummer: **93110072.1**

(22) Anmeldetag: **24.06.1993**

# (54) Polymethacrylimide mit hoher Wärmeformbeständigkeit

Poly(methacryl imides) with elevated heat distortion resistance

Polyméthacrylimides à stabilité dimensionnelle à chaud plus élevée

(84) Benannte Vertragsstaaten:
**AT BE CH DE ES FR GB IT LI NL**

(30) Priorität: **02.07.1992 DE 4221712**

(43) Veröffentlichungstag der Anmeldung:
**05.01.1994 Patentblatt 1994/01**

(73) Patentinhaber: **BASF Aktiengesellschaft**
**67063 Ludwigshafen (DE)**

(72) Erfinder:
- **Besecke, Siegmund, Dr., p.A. Erich Besecke**
  **D-3250 Hameln (DE)**
- **Deckers, Andreas, Dr.**
  **D-6700 Ludwigshafen (DE)**
- **Lauke, Harald, Dr.**
  **D-6800 Mannheim 1 (DE)**

(56) Entgegenhaltungen:
**EP-A- 0 440 583**
**US-A- 4 252 701**
**US-A- 4 495 339**

- **PATENT ABSTRACTS OF JAPAN vol. 11, no. 132 (C-417)(2579) 24. April 1987**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 577 002 B1

Printed by Jouve, 75001 PARIS (FR)

**Beschreibung**

Copolymerisate, erhältlich durch

(I) Copolymerisation eines Monomerengemisches aus

(A) 1 bis 98 Gew.-% eines Monomeren der allgemeinen Formel I

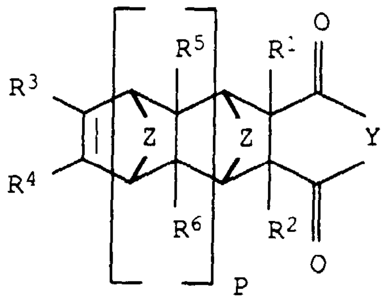

I

in der die Variablen folgende Bedeutung haben:

$R^1$ bis $R^6$ Wasserstoff, $C_1$-$C_{10}$-Alkyl, $C_1$-$C_{10}$-Alkoxy, wobei in den Alkyl- oder Alkoxyresten mit mehr als einem Kohlenstoffatom jeweils zwischen zwei Kohlenstoffatomen ein Sauerstoffatom eingefügt sein kann, $C_5$-$C_8$-Cycloalkyl, $C_6$-$C_{10}$-Aryl, $C_6$-$C_{10}$-Aryl-$C_1$-$C_{10}$-alkyl, $C_6$-$C_{10}$-Aryloxy, wobei die Arylgruppen bis zu drei $C_1$-$C_{10}$-Alkylgruppen tragen können, Cyano, Halogen, -CO-O-$R^7$, -O-CO-$R^7$, -CO-$N^7R^8$, wobei

$R^7$, $R^8$ Wasserstoff, $C_1$-$C_{10}$-Alkyl, $C_5$-$C_8$-Cycloalkyl, $C_6$-$C_{10}$-Aryl, $C_6$-$C_{10}$-Aryl-$C_1$-$C_{10}$-alkyl, wobei die Arylgruppen bis zu drei $C_1$-$C_{10}$-Alkylgruppen tragen können, bedeuten;

p 0, 1 oder 2;

Z -$CH_2$-, Sauerstoff oder Schwefel, wobei für $p > 0$ die Reste Z gleich oder verschieden sein können;

Y Sauerstoff oder -N-$R^9$, wobei

$R^9$ Wasserstoff, $C_1$-$C_{22}$-Alkyl, $C_5$-$C_{12}$-Cycloalkyl, $C_6$-$C_{10}$-Aryl oder $C_6$-$C_{10}$-Aryl-$C_1$-$C_{10}$-alkyl bedeutet, wobei diese Reste, mit Ausnahme von Wasserstoff und $C_1$-$C_{22}$-Alkyl, bis zu dreifach mit Resten, ausgewählt aus der Gruppe bestehend aus $C_1$-$C_4$-Alkyl, $C_1$-$C_4$-Alkoxy und Halogen, substituiert sein können;

(B) 1 bis 98 Gew.-% mindestens einer Verbindung ausgewählt aus der Gruppe bestehend aus Acryl- und Methacrylsäure und Estern der Acryl- und Methacrylsäure der allgemeinen Formel II

$$CH_2{=}C\,(R^{10})\,\text{-}COOR^9 \qquad \text{II}$$

in der $R^{10}$ Wasserstoff oder Methyl bedeutet,
und

(C) 0 bis 98 Gew.-% mindestens eines weiteren copolymerisierbaren Monomeren,
und

(II) Umsetzung der so erhaltenen Copolymerisate mit einer Verbindung der allgemeinen Formel III

$$R^{11}NH_2 \qquad III$$

in der $R^{11}$ Wasserstoff, $C_1$-$C_{22}$-Alkyl, $C_5$-$C_8$-cycloalkyl, $C_6$-$C_{10}$-Aryl oder $C_6$-$C_{10}$-Aryl-$C_1$-$C_4$-alkyl bedeutet, wobei diese Reste, mit Ausnahme von Wasserstoff und der $C_1$-$C_{22}$-Alkyl-Reste, bis zu dreifach mit Resten, ausgewählt aus der Gruppe bestehend aus $C_1$-$C_4$-Alkyl, $C_1$-$C_4$-Alkoxy und Halogen, substituiert sein können, oder Mischungen davon.

Weiterhin betrifft die Erfindung ein Verfahren zur Herstellung dieser Copolymerisate, deren Verwendung zur Herstellung von Formkörpern, Folien oder Fasern, sowie Formkörper, Folien oder Fasern aus diesen Polymerisaten.

Ferner betrifft die Erfindung Homopolymere und statistische Copolymere, ein Verfahren zu ihrer Herstellung, deren Verwendung zur Herstellung von Formkörpern, Folien oder Fasern, sowie Formkörper, Folien oder Fasern aus diesen Polymerisaten.

Thermoplastische Formmassen auf Basis von Polymethylmethacrylat ("PMMA") weisen im allgemeinen eine hohe Transparenz bei sehr guten Witterungsbeständigkeiten auf. Für viele Anwendungen ist es jedoch zusätzlich wünschenswert, daß PMMA-Formmassen auch über eine hohe Wärmeformbeständigkeit verfügen. Einige der gängigsten Methoden, die Wärmeformbeständigkeit zu erhöhen, bestehen darin, daß man Methylmethacrylat ("MMA") mit beispielsweise alpha-Methylstyrol, Maleinsäureanhydrid oder am Stickstoffatom substituierten Methacrylsäureamide copolymerisiert. Allerdings führt dies im allgemeinen zu Produkten mit verringerter Bewitterungsstabilität, störender Eigenfarbe und geringer thermischer Stabilität.

Eine weitere Möglichkeit die Glasübergangstemperatur von thermoplastischen Formmassen auf PMMA-Basis zu erhöhen, ist die polymeranaloge Umsetzung von PMMA mit primären Aminen (Imidierung) unter Ausbildung von Glutarimidstrukturen wie der folgenden

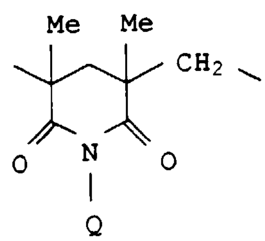

Die Glasübergangstemperatur solcher imidierter PMMA-Formmassen ist sowohl vom Anteil der Glutarimideinheiten (Imidierungsgrad) im Polymeren als auch vom Substituenten Q am Imidstickstoffatom abhängig.

Bei der vollständigen Imidierung von PMMA kann man für Q = Wasserstoff sehr hohe Glasübergangstemperaturen erzielen. Jedoch erhöht sich nachteilig die Wasseraufnahme und die Fließfähigkeit solcher Formmassen wird zu stark erniedrigt. Durch andere Reste Q wie Methyl oder Cyclohexyl kann man zwar diese Nachteile überwinden, allerdings geht dies zu Lasten der Wärmeformbeständigkeit. Durch aromatische Reste Q wie Phenyl kann man zwar hohe Glasübergangstemperaturen erzielen. Nachteilig wirken sich aber hierbei eine zu geringe Witterungsstabilität und eine erhöhte Spannungsrißkorrosion aus.

In der US-A 4,246,374 wird ein Verfahren zur Umsetzung verschiedener Copolymerisate, erhältlich durch Copolymerisation von MMA mit Comonomeren wie Styrol, alpha-Methylstyrol, (Meth)Acrylnitril, Maleinsäureanhydrid, N-Alkyl-Maleinimid, Ethylen und Propylen, mit Aminen auf einem Extruder (Schmelzeprozeß) beschrieben. Die so hergestellten imidierten Copolymerisate weisen jedoch keine ausreichend hohen Wärmeformbeständigkeiten auf.

In der US-A 4,012,572 wird beschrieben, wie man eine Erhöhung der Wärmeformbeständigkeit von PMMA-Formmassen durch Copolymerisation von MMA mit Norbornenderivaten erreicht.

Weiterhin sind aus der JP-A 01,311,112 Polymere bekannt, erhältlich durch Copolymerisation von 7-Oxa-bicyclo [2.2.1]-hept-5-en-2,3-dicarbonsäureimiden (Formel IV)

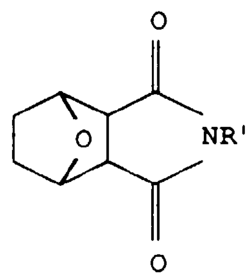

IV

mit weiteren Comonomeren. Jedoch weisen diese Polymere keine ausreichend hohe Wärmeformbeständigkeit auf.

Aufgabe der vorliegenden Erfindung war es daher, transparente, thermoplastisch verarbeitbare Formmassen mit hoher Wärmeformbeständigkeit bereitzustellen.

Demgemäß wurden die eingangs definierten Copolymerisate gefunden.

Außerdem wurden ein Verfahren zur Herstellung dieser Copolymerisate, deren Verwendung zur Herstellung von Formkörpern, Folien und Fasern sowie daraus hergestellte Formkörper, Folien und Fasern gefunden.

Ferner wurden Homopolymere und Copolymere, die zur Herstellung der eingangs definierten Copolymerisate dienen, Verfahren zu deren Herstellung, ihre Verwendung zur Herstellung von Formkörpern, Folien und Fasern sowie daraus hergestellte Formkörper, Folien und Fasern, gefunden.

Als Komponente A) setzt man erfindungsgemäß 1 bis 98 Gew.-%, bevorzugt 5 bis 50 Gew.-%, mindestens eines Monomeren I ein.

Die Monomeren I sind an sich bekannt oder in bekannter Weise erhältlich, z.B. durch Diels-Alder-Reaktionen von entsprechend substituierten Dienen wie Cyclopentadien, Thiophen, Furan oder Methylcyclopentadien, und Dienophilen wie Maleinsäureanhydrid ("MSA") oder substituierte Maleinsäureimide ("MSI"). Bei mehrkernigen Verbindungen I setzt man im allgemeinen als Dienophil ein Addukt, hergestellt aus MSA und/ oder MSI und einem der oben aufgeführten Diene, ein.

Die Reaktionsbedingungen der Umsetzungen, die zu den jeweiligen Monomeren I führen, entsprechen im allgemeinen denjenigen, wie sie in der Diels-Alder-Chemie üblich sind. Einen Überblick über diverse Reaktionsbedingungen bieten z.B. G. Brieger, J.N. Bennett: Chem. Rev. 80 (1980) 63 und A. Wasserman: "Diels Alder Reactions", American Elsevier, New York (1965).

Beispielsweise erhält man Verbindungen des Typs I mit $p = 0$ dadurch, daß man die entsprechend substituierten Maleinsäure-Derivate wie Maleinsäureanhydrid und Maleinsäureimid sowie deren Derivate nach an sich bekannten Methoden mit Cyclopentadien, Furan oder Thiophen oder deren Derivaten umsetzt. Die Cycloaddition kann man thermisch oder photochemisch initiieren.

Durch weitere analoge Umsetzung der so erhaltenen tricyclischen Verbindungen mit weiteren Dienen wie den oben angeführten kann man die Monomeren des Typs I mit $p = 1$ und 2 erhalten.

Als Monomere I kommen vor allem die unsubstituierten Stammverbindungen, in denen $R^1$ Wasserstoff bedeutet, in Betracht. Weiterhin geeignete Monomere dieser Klasse sind die definitionsgemäßen Verbindungen, die für $p = 0$ bis zu vier, für $p = 1$ bis zu sechs und für $p = 2$ bis zu acht Substituenten ($R^1$-$R^6$) tragen können. Als Substituenten $R^1$-$R^6$, die gleich oder verschieden voneinander sein können, seien genannt:

Wasserstoff;

$C_1$-$C_{10}$-Alkyl wie Methyl, Ethyl, n-Propyl, i-Propyl, n-Butyl, sek.-Butyl, i-Butyl, tert.-Butyl, n-Pentyl, i-Pentyl, sek.-Pentyl, tert.-Pentyl, neo- Pentyl, n-Hexyl, n-Heptyl, n-Octyl, n-Nonyl, n-Decyl, besonders bevorzugt $C_1$-$C_4$-Alkyl wie Methyl, Ethyl, n-Propyl, i-Propyl, n-Butyl, i-Butyl, sek.-Butyl, tert.-Butyl; wobei in Ketten aus mindestens zwei Kohlenstoffatomen jeweils zwischen zwei Kohlenstoffatomen ein Sauerstoffatom eingefügt sein kann wie $-CH_2-O-CH_3$, $-CH_2-O-CH_2-O-CH_3$, besonders bevorzugt $-CH_2-O-CH_3$;

$C_1$-$C_{10}$-Alkoxy wie Methoxy, Ethoxy, n-Propoxy, i-Propoxy, n-Butoxy, sek.-Butoxy, i-Butoxy, tert.-Butoxy, n-Pentoxy, i-Pentoxy, sek.-Pentoxy, tert.-Pentoxy, neo-Pentoxy, n-Hexoxy, n-Heptoxy, n-Octoxy, n-Nonoxy, n-Decoxy, besonders bevorzugt $C_1$-$C_4$-Alkoxy wie Methoxy, Ethoxy, n- Propoxy, i-Propoxy, n-Butoxy, i-Butoxy, sek.-Butoxy, tert.-Butoxy; wobei in Ketten aus mindestens zwei Kohlenstoffatomen jeweils zwischen zwei Kohlenstoffatomen ein Sauerstoffatom eingefügt sein kann wie

$-O-CH_2-O-CH_3$, $-O-CH_2-O-CH_2-O-CH_3$, $-O-CH_2CH_3-O-CH_3$, besonders bevorzugt $-O-CH_2-O-CH_3$;

$C_5$-$C_8$-Cycloalkyl wie Cyclopentyl, Cyclohexyl, Cycloheptyl, Cyclooctyl;

$C_6$-$C_{10}$-Aryl wie Phenyl, Naphthyl, bevorzugt Phenyl, wobei die Arylreste bis zu drei $C_1$-$C_{10}$-Alkylgruppen tragen können, vorzugsweise Tolyl;

$C_6$-$C_{10}$-Aryl-$C_1$-$C_{10}$-alkyl, bevorzugt Phenyl-$C_1$-$C_4$-alkyl wie Benzyl, 2-Phenylethyl, 3-Phenylpropyl, 4-Phenylbutyl, besonders bevorzugt Benzyl, 2-Phenylethyl, 3-Phenylpropyl, wobei die Arylgruppen bis zu drei $C_1$-$C_{10}$-Alkylgruppen tragen können, vorzugsweise 4-Methylbenzyl;

$C_6$-$C_{10}$-Aryloxy wie Phenoxy, Naphthyloxy, bevorzugt Phenoxy, wobei die Aryloxyreste bis zu drei $C_1$-$C_{10}$-Alkylgruppen tragen können, vorzugsweise Tolyloxy;

Cyano; Halogen wie Chlor oder Brom;

Außerdem können die Substituenten $R^1$-$R^6$ Säure-, Ester- oder Amidgruppen der Formeln -CO-O-$R^7$, -O-CO-$R^7$, -CO-N$R^7R^8$ sein, wobei $R^7$ und $R^8$, gleich oder verschieden sein und folgende Bedeutung haben können:

Wasserstoff;

$C_1$-$C_{10}$-Alkyl wie Methyl, Ethyl, n-Propyl, i-Propyl, n-Butyl, sek.-Butyl, i-Butyl, tert.-Butyl, n-Pentyl, i-Pentyl, sek.-Pentyl, tert.-Pentyl, neo- Pentyl, n-Hexyl, n-Heptyl, n-Octyl, n-Nonyl, n-Decyl, besonders bevorzugt $C_1$-$C_4$-Alkyl wie Methyl, Ethyl, n-Propyl, i-Propyl, n-Butyl, i-Butyl, sek.-Butyl, tert.-Butyl;

$C_5$-$C_8$-Cycloalkyl wie Cyclopentyl, Cyclohexyl, Cycloheptyl, Cyclooctyl;

$C_6$-$C_{10}$-Aryl wie Phenyl, Naphthyl, bevorzugt Phenyl, wobei die Arylreste bis zu drei $C_1$-$C_{10}$-Alkylgruppen tragen können, vorzugsweise Tolyl;

$C_6$-$C_{10}$-Aryl-$C_1$-$C_{10}$-alkyl, bevorzugt Phenyl-$C_1$-$C_4$-alkyl wie Benzyl, 2-Phenylethyl, 3-Phenylpropyl, 4-Phenylbutyl, besonders bevorzugt Benzyl, 2-Phenylethyl, 3-Phenylpropyl, wobei die Arylgruppen bis zu drei $C_1$-$C_{10}$-Alkylgruppen tragen können, vorzugsweise 4-Methylbenzyl;

p hat die Bedeutung 0, 1 oder 2, bevorzugt 0;

Z kann -$CH_2$-, Sauerstoff oder Schwefel bedeuten, bevorzugt -$CH_2$- und Sauerstoff; für $p > 0$ können die Reste Z gleich oder verschieden sein;

Y steht für Sauerstoff oder die -N-$R^9$-Gruppe, wobei $R^9$ folgende Bedeutung haben kann:

Wasserstoff;

$C_1$-$C_{22}$-Alkyl, darunter vorzugsweise $C_1$-$C_{12}$-Alkyl wie Methyl, Ethyl, n- Propyl, i-Propyl, n-Butyl, sek.-Butyl, i-Butyl, tert.-Butyl, n-Pentyl, i-Pentyl, sek.-Pentyl, tert.-Pentyl, neo-Pentyl, n-Hexyl, n-Heptyl, n-Octyl, n-Nonyl, n-Decyl, n-Undecyl, n-Dodecyl und Stearyl, besonders bevorzugt $C_1$-$C_4$-Alkyl wie Methyl, Ethyl, n-Propyl, i-Propyl, n-Butyl, i-Butyl, sek.-Butyl, tert.-Butyl;

$C_5$-$C_{12}$-Cycloalkyl wie Cyclopentyl, Cyclohexyl, Cycloheptyl, Cyclooctyl, Cyclononyl, Cyclodecyl, Cycloundecyl, Cyclododecyl, bevorzugt Cyclopentyl und Cyclohexyl, wobei diese Reste bis zu dreifach mit Resten ausgewählt aus der Gruppe $C_1$-$C_4$-Alkyl, $C_1$-$C_4$-Alkoxy und Halogen wie Fluor, Chlor oder Brom substituiert sein können wie 4-Methylcyclohexyl, 4-Methoxycyclohexyl, 2,4,6-Trimethylcyclohexyl;

$C_6$-$C_{10}$-Aryl wie Phenyl, Naphthyl, bevorzugt Phenyl, wobei diese Reste bis zu dreifach mit Resten ausgewählt aus der Gruppe $C_1$-$C_4$-Alkyl, $C_1$-$C_4$-Alkoxy und Halogen wie Fluor, Chlor oder Brom substituiert sein können wie Tolyl;

$C_6$-$C_{10}$-Aryl-$C_1$-$C_{10}$-alkyl, bevorzugt Phenyl-$C_1$-$C_4$-alkyl wie Benzyl, 2- Phenylethyl, 3-Phenylpropyl, 4-Phenylbutyl, besonders bevorzugt Benzyl, 2-Phenylethyl, 3-Phenylpropyl, wobei dies Arylreste bis zu dreifach mit Resten ausgewählt aus der Gruppe $C_1$-$C_4$-Alkyl, $C_1$-$C_4$-Alkoxy und Halogen wie Fluor, Chlor oder Brom substituiert sein

können, vorzugsweise 4-Methylbenzyl.

Als Beispiele für die Monomeren I seien genannt:
Bicyclo-[2.2.1]-hept-2-en-5,6-dicarbonsäureanhydrid,
Bicyclo-[2.2.1]-hept-2-en-5,6-dicarboxamid,
N-Methyl-bicyclo-[2.2.1]-hept-2-en-5,6-dicarboxamid,
N-Phenyl-bicyclo-[2.2.1]-hept-2-en-5,6-dicarboxamid,
N-Cyclohexyl-bicyclo-[2.2.1]-hept-2-en-5,6-dicarboxamid,
7-Oxabicyclo-[2.2.1]-hept-2-en-5,6-dicarbonsäureanhydrid,
1-Methyl-7-oxabicyclo-[2.2.1]-hept-2-en-5,6-dicarbonsäureanhydrid,
1,4-Dimethyl-7-oxabicyclo-[2.2.1]-hept-2-en-5,6-dicarbonsäureanhydrid,
1,4-Diethyl-7-oxabicyclo-[2.2.1]-hept-2-en-5,6-dicarbonsäureanhydrid,
1-Methoxy-7-oxabicyclo-[2.2.1]-hept-2-en-5,6-dicarbonsäureanhydrid,
1-Methoxy-4-methyl-7-oxabicyclo-[2.2.1]-hept-2-en-5,6-dicarbonsäurean-hydrid,
1-Phenyl-7-oxabicyclo-[2.2.1]-hept-2-en-5,6-dicarbonsäureanhydrid,
1-Phenoxy-7-oxabicyclo-[2.2.1]-hept-2-en-5,6-dicarbonsäureanhydrid,
1-Benzyl-7-oxabicyclo-[2.2.1]-hept-2-en-5,6-dicarbonsäureanhydrid,
2-Chlor-7-oxabicyclo-[2.2.1]-hept-2-en-5,6-dicarbonsäureanhydrid,
1-Acetyl-7-oxabicyclo-[2.2.1]-hept-2-en-5,6-dicarbonsäureanhydrid,
7-Oxabicyclo-[2.2.1]-hept-2-en-5,6-dicarboxamid,
N-Methyl-7-oxabicyclo-[2.2.1]-hept-2-en-5,6-dicarboxamid,
N-Phenyl-7-oxabicyclo-[2.2.1]-hept-2-en-5,6-dicarboxamid,
N-Cyclohexyl-7-oxabicyclo-[2.2.1]-hept-2-en-5,6-dicarboxamid.

Es versteht sich von selbst, daß man auch Mischungen verschiedener der vorstehend genannten Monomere I einsetzen kann. Ebenso kann man sowohl stereochemisch einheitliche als auch Mischungen verschiedener Stereoisomerer verwenden.

Die Monomeren I, oder Mischungen davon, copolymerisiert man erfindungsgemäß mit den Monomeren II, gewünschtenfalls zusammen mit mindestens einem weiteren copolymerisierbaren Monomeren. Dabei besteht das zu polymerisierende Monomerengemisch aus 1 bis 98 Gew.-%, bevorzugt 5 bis 50 Gew.-% des Monomeren I, 1 bis 98 Gew.-%, vorzugsweise 50 bis 95 Gew.-% des Monomeren II und 0 bis 98 Gew.-%, bevorzugt 0 bis 40 Gew.-% mindestens eines weiteren damit copolymerisierbaren Monomeren.

Man kann die Monomeren I, oder Mischungen davon, aber auch zu Homopolymerisaten umsetzen und gewünschtenfalls mit den weiter unten aufgeführten Zusatz- und Verarbeitungshilfsmitteln versehen und nach bekannten Verfahren z.B. Spritzguß- oder Extrusionsverfahren zu thermoplastischen Formmassen weiterverarbeiten.

Als Komponente (B) (Monomer II) des Monomerengemischs verwendet man erfindungsgemäß mindestens eine Verbindung ausgewählt aus der Gruppe bestehend aus Acryl- und Methacrylsäure und Estern der Acryl- und Methacrylsäure der allgemeinen Formel

$$CH_2=C(R^{10})\text{-}COOR^9 \qquad \text{II}$$

in der $R^{10}$ Wasserstoff oder Methyl bedeutet. Bevorzugt sind die $C_1$-$C_{12}$-Alkylester, insbesondere die $C_1$-$C_4$-Alkylester wie Methylacrylat, Ethylacrylat, Propylacrylat, n-Butylacrylat, tert.-Butylacrylat sowie 2-Ethylhexylacrylat und Laurylacrylat, Methylmethacrylat, Ethylmethacrylat, Propylmethacrylat, n-Butylmethacrylat, tert.-Butylmethacrylat, 2-Ethylhexylmethacrylat, insbesondere Methylmethacrylat, Phenylacrylat und Phenylmethacrylat, Benzylacrylat und Benzylmethacrylat, 2-Phenylethylacrylat und 2-Phenylethylmethacrylat, 3-Phenylpropylacrylat und 3-Phenylpropylmethacrylat.

Des weiteren kann man dem Monomerengemisch als Komponente (c) 0 bis 98 Gew.-%, bevorzugt 0 bis 40 Gew.-%, weitere radikalisch copolymerisierbare Monomere hinzufügen.

Beispielhaft seien genannt:
Acryl- und Methacrylnitril,
Acryl- und Methacrylamid sowie deren N-Alkyl- und N,N-Dialkylderivate mit $C_1$-$C_{20}$-Alkylgruppen,
Vinyl- und Vinylidenester von aliphatischen $C_2$-$C_8$-Carbonsäuren wie Vinylacetat,
Vinyl- und Vinylidenhalogenide wie Vinylchlorid und Vinylidenchlorid,
vinylaromatische Monomere wie Styrol und alpha-Methylstyrol sowie dessen ein- oder mehrfach kernsubstituierte Derivate, beispielsweise 2-, 3-, 4-Methylstyrol, 2-, 3-, 4-Ethylstyrol, 2-, 3-, 4-Isopropylstyrol, 4-tert.-Butylstyrol, 3,4-Dimethylstyrol, 2-, 4-Chlorstyrol, 2-, 4-Bromstyrol, 3,4-Dichlorstyrol, Vinyltoluol, alpha-Chlorstyrol, besonders bevorzugt Styrol,
Maleinsäureanhydrid,
Malein-, Fumar- und Itakonsäure-$C_1$-$C_{10}$-alkylester,
Maleinsäureimid, Fumar- und Itakonsäureamid sowie deren N-Alkyl- und N,N-Dialkylderivate mit $C_1$- bis $C_{10}$-Alkylgruppen,
sowie Mischungen davon.

Die Herstellung der erfindungsgemäßen Copolymerisate führt man im allgemeinen in an sich bekannter Weise beispielsweise in Substanz oder in Lösung durch.

Bei der Herstellung durch Substanzpolymerisation kann man öllösliche Initiatoren (Radikalstarter wie Diacylperoxide, Perester wie Pivalinpersäure-tert.-butylester, Peroxidicarbonate, Hydroperoxide, Dialkylperoxide wie Dilaurylperoxid oder Azoverbindungen wie Azo-bis-isobutyronitril) verwenden, die man in der Regel in Mengen von 0,01 bis 5, bevorzugt von 0,05 bis 2 Gew.-%, bezogen auf die Monomerenmischung, einsetzt.

Die Polymerisationstemperatur liegt in der Regel im Bereich von 20 bis 200°C, bevorzugt von 50 bis 160°C.

Das Molekulargewicht kann man durch geeignete Kettenüberträger wie handelsübliche Mercaptane oder durch eine geeignete Temperaturführung regulieren. Im allgemeinen wählt man Molekulargewichte im Bereich von 30.000 bis 250.000, bevorzugt von 80.000 bis 180.000 g/mol (Gewichtsmittelwerte des Molekulargewichts).

Die Herstellung der Copolymerisate kann auch durch Lösungpolymerisation erfolgen. Geeignete Lösungsmittel sind beispielsweise Toluol, Xylol, Aceton, Ethylacetat oder Tetrahydrofuran. Im übrigen kann man die Polymerisation unter den für die Substanzpolymerisation geschilderten Bedingungen durchführen.

Nähere Ausführungen hierzu finden sich beispielsweise in Houben-Weyl, Methoden der organischen Chemie, Bd. 14/1.

Als Imidierungsreagenzien III, $R^{11}NH_2$, kommen neben Ammoniak primäre Amine zur Anwendung, die ausgewählt sind aus der Gruppe bestehend aus
$C_1$-$C_{22}$-Alkylaminen, $C_5$-$C_8$-Cycloalkylaminen, $C_6$-$C_{10}$-Arylaminen, $C_6$-$C_{10}$-Aryl-$C_1$-$C_4$-alkylaminen, wobei die Cycloalkyl-, Aryl- und Aralkylamine bis zu dreifach mit Resten, ausgewählt aus der Gruppe bestehend aus $C_1$-$C_4$-Alkyl, $C_1$-$C_4$-Alkoxy und Halogen wie Fluor, Chlor und Brom, substituiert sein können.

Beispielhaft seien genannt Methylamin, Ethylamin, n-Propylamin, i-Propylamin, n-Butylamin, 1-Methylpropylamin, 2-Methylpropylamin, 1,1-Dimethylethylamin, n-Pentylamin, 1-Methylbutylamin, 2-Methylbutylamin, 3-Methylbutylamin, 2-Dimethylpropylamin, 1-Ethylpropylamin, n-Hexylamin, n-Heptylamin, n- Octylamin, n-Nonylamin, n-Decylamin, n-Undecylamin, n-Dodecylamin, Stearylamin, Cyclopentylamin, Cyclohexylamin, Cycloheptylamin, Cyclooctylamin, Anilin, 2-, 4-Methylanilin, 2-, 4-Methoxyanilin, 2-, 4-Chloranilin, 2-, 4-Bromanilin, Benzylamin, Phenethylamin und Phenylpropylamin, besonders bevorzugt Cyclohexylamin.

Eine bevorzugte Ausführungsform besteht darin, daß man den durch die Aminolyse der Estergruppen entstandenen Alkohol aus dem Reaktionsgemisch entfernt. Besonders vorteilhaft kann man dies durch kontinuierliches Abdestillieren des Alkohols erreichen. Hierzu ist es zweckmäßig, daß man für die Imidierung ein Amin verwendet, das einen höheren Siedepunkt aufweist als der aus dem Reaktionsgemisch zu entfernende Alkohol, so daß keine oder nur unwesentliche Mengen Amin mitentfernt werden.

Prinzipiell kann man auch Amine mit gleichem oder niedrigerem Siedepunkt als der abzudestillierende Alkohol einsetzen, indem man das mitentfernte Amin beispielsweise durch weitere Destillation vom Alkohol abtrennt und wieder in das Reaktionsgemisch einbringt. Jedoch wird die hier vorgeschlagene Variante (Siedepunkt Amin > Siedepunkt Alkohol) aufgrund der einfacheren Reaktionsführung bevorzugt.

Die Reaktion führt man in der Regel so durch, daß man eine Mischung bestehend aus Copolymerisat (I) und Amin bevorzugt in einem Lösungsmittel unter Sauerstoffausschluß zum Sieden erhitzt und den während der Reaktion entstehenden Alkohol durch Destillation kontinuierlich aus dem Reaktionsgemisch entfernt.

Das Amin kann man dabei gleich zu Beginn der Reaktion vorlegen oder beispielsweise kontinuierlich in dem Maße wie es verbraucht wird zugeben.

Das Gewichtsverhältnis von eingesetztem Amin zu Acrylat-Polymer wählt man im Bereich von 1:1 bis 400:1, bevorzugt von 1:1 bis 200:1.

Als Lösungsmittel kann man prinzipiell alle aprotischen, polaren Lösungsmittel wie
N,N'-disubstituierte, cyclische oder acyclische Carbonsäureamide wie Dimethylformamid, Diethylformamid, Dimethylacetamid, Diethylacetamid
N-Methyl-2-pyrrolidon, N-Ethyl-2-pyrrolidon
N,N,N',N'-tetrasubstituierte, cyclische oder acyclische Harnstoffe wie Tetramethylharnstoff
N-substituierte, cyclische oder acyclische (Poly)Amine wie Dicyclohexylmethylamin, Dimethylcyclohexylamin, N,N,N',N'-Tetramethylethylendiamin, N,N,N',N'-Tetramethylhexamethylendiamin
hochsiedende Ether wie Ethylenglykoldimethylether, Diethylenglykoldimethylether
Alkylencarbonate wie Ethylencarbonat, Propylencarbonat
sowie andere übliche aprotische und polare Lösungsmittel wie Hexamethylphosphorsäuretriamid, Nitroalkane wie Nitromethan, Dimethylsulfoxid, Diphenylsulfoxid und Sulfolan verwenden, wobei N-Methylpyrrolidon bevorzugt ist.

Das Gewichtsverhältnis von verwendetem Lösungsmittel zu Polymer liegt in der Regel im Bereich von 1:1 bis 100:1, bevorzugt von 1:1 bis 10:1.

Die Reaktionstemperatur wählt man im allgemeinen im Bereich von 100 bis 280°C, bevorzugt im Bereich von 120 bis 220°C. Der Reaktionsdruck ist in der Regel unkritisch. Man arbeitet im allgemeinen im Bereich von 80 bis 250 kPa, bevorzugt bei Atmosphärendruck.

Der pH-Bereich liegt wegen des eingesetzten Amins in der Regel oberhalb von 7.

Die Reaktionszeit liegt in der Regel im Bereich von 1 bis 20 h, bevorzugt 1 bis 10 h.

Des weiteren kann man dem Reaktionsgemisch Katalysatoren in Mengen im Bereich von 0,01 bis 10 Gew.-%, bevorzugt von 0,05 bis 2 Gew.-%, bezogen auf das eingesetzte Polymer, zur Beschleunigung der Reaktion zusetzen.

Beispielhaft seien genannt
tertiäre Amine wie Tricyclohexylamin;
substituierte Guanidine wie 1,1,3,3-Tetramethylguanidin und 1,3- Diphenylguanidin;
tetrasubstituierte Alkylammoniumverbindungen wie Trimethylstearylammoniumchlorid;
organische Titanverbindungen wie Tetrapropoxytitan und Tetrabutoxytitan;
organische Zinnverbindungen wie Dibutylzinnoxid und Dibutylzinndidodecanat;
aromatische Amine und Imide wie Chinolin, Isochinolin, 4-Benzylpyridin, 4-Phenylpyridin, 2-Hydroxypyridin, 1,3-, 1,4- und 2,3-Benzodiazin, 2,2'-, 2,3'- und 2,4'-Bipyridyl;
Imide wie N,N'-Dicyclohexylcarbodiimid;
sowie Antimontrioxid, Zinndioxid, Natriumamid, Natrium- und Kaliumalkoholate wie Natrium- und Kaliummethanolat, Ammoniumchlorid und Ammoniumiodid.

Die erfindungsgemäßen Copolymerisate und die daraus hergestellten Formkörper, Folien oder Fasern können übliche Zusatzstoffe und Verarbeitungshilfsmittel enthalten. Deren Anteil liegt in der Regel im Bereich von 1 bis 40 Gew.-%, bezogen auf das Gesamtgewicht der Copolymerisate.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher, Antistatika und Flammschutzmittel.

Oxidationsverzögerer und Wärmestabilisatoren, die den thermoplastischen Massen gemäß der Erfindung zugesetzt werden können, sind z.B. sterisch gehinderte Phenole, Hydrochinone, Phosphite und Abkömmlinge und substituierte Vertreter dieser Gruppe und Mischungen dieser Verbindungen, vorzugsweise in Konzentrationen bis zu 1 Gew.-%, bezogen auf das Gewicht der Mischung.

Beispiele für UV-Stabilisatoren sind substituierte Resorcine, Salicylate, Benzotriazole und Benzophenone, die man im allgemeinen in Mengen bis zu 1 Gew.-% einsetzen kann.

Gleit- und Entformungsmittel, die man in der Regel bis zu 1 Gew.-% der thermoplastischen Masse zusetzen kann, sind beispielsweise Stearinsäure, Stearylalkohol, Stearinsäurealkylester und -amide sowie Ester des Pentaerythrits mit langkettigen Fettsäuren. Geeignete Farbstoffe sind organische Farbstoffe, beispielsweise Anthrachinonrot, organische Pigmente und Lacke wie Phtalocyaninblau, anorganische Pigmente wie Titandioxid und Cadmiumsulfid. Als Weichmacher seien beispielhaft Dioctylphthalat, Dibenzylphthalat und Butylbenzylphthalat genannt.

Als Flammschutzmittel kann man beispielsweise eine phosphorhaltige Verbindung in Mengen von 1 bis 40, vorzugsweise von 10 bis 30 Gew.-%, einsetzen.

Solche Flammschutzmittel sind beispielsweise organische Phosphorverbindungen wie die Ester der Phosphorsäure, phosphorigen Säure und von Phosphon- und Phosphinsäure sowie tertiäre Phosphine und Phosphinoxide. Als Beispiel sei Triphenylphosphinoxid genannt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris-(aziridinyl)-phosphinoxid oder Tetrakis-(hydroxymethyl)-phosphoniumchlorid.

Die Zugabe der Zusatzstoffe kann man in jeder Stufe der Herstellung durchführen, zweckmäßig gibt man die Stabilisatoren frühzeitig zu, um schon zu Beginn einen Schutz zu haben. In Übereinstimmung damit gibt man im allgemeinen die Stabilisatoren schon während des Polymerisationsverfahrens zu, soweit sie dieses Verfahren nicht stören.

Die erfindungsgemäßen Copolymerisate kann man nach üblichen Methoden verarbeiten, z.B. durch Spritzguß, Extrusion oder Sintern zur Herstellung von Formkörpern, Folien oder Fasern. Mit den erfindungsgemäßen Copolymerisaten lassen sich thermoplastisch verarbeitbare Formmassen mit hoher Wärmeformbeständigkeit herstellen.

Beispiele

Herstellung der Copolymerisate I

Die Lösungsviskosität wird angegeben durch die Viskositätszahl VZ, die die relative Erhöhung der Viskosität eines Lösungsmittels durch 0,1 bis 1,0 g/100 ml gelöstes Polymer, geteilt durch die Konzentration in g/100 ml angibt. Die Viskositätszahlen steigen mit dem Polymerisationsgrad an.

$$VZ = \left( \frac{\eta}{\eta_o} - 1 \right) \bullet \frac{1}{C}$$

$\frac{\eta}{\eta_o}$ = Viskositätsverhältnis mit

$\eta$ = Viskosität der Polymerlösung definierter Konzentration

$\eta_o$ = Viskosität des Lösungsmittels

C = Konzentration der Lösung in g/ml.

Die Bestimmung der Glasübergangstemperatur $T_g$ der Polymere erfolgte nach der DSC-Methode (ASTM D 3418-82) auf einem DSC-30-Gerät der Fa. Mettler.

Beispiel 1

20 g N-Phenyl-bicyclo-[2.2.1]-hept-5-en-5,6-dicarboxamid, 180 g Methylmethacrylat und 1800 g Tetrahydrofuran wurden in Gegenwart von 0,2 g Didodecanoylperoxid und 0,1 g t-Butylperpivalat im Laufe von 8 h bei 60°C unter $N_2$-Atmosphäre polymerisiert. Anschließend wurde das Polymere mit Hexan ausgefällt und danach getrocknet.

Eigenschaften des Produkts: VZ = 31, $T_g$ = 127°C.

Beispiel 2

Analog zu Beispiel 1 wurde eine Mischung aus 40 g N-Phenyl-bicyclo-[2.2.1]-hept-5-en-5,6-dicarboxamid, 80 g Methylmethacrylat und 80 g Styrol polymerisiert. Anschließend wurde das Polymere mit Hexan ausgefällt und danach getrocknet.

Eigenschaften des Produkts: VZ = 30, $T_g$ = 141°C.

Beispiel 3

Analog zu Beispiel 1 wurde eine Mischung aus 20 g N-Cyclohexyl-bicyclo-[2.2.1]-hept-5-en-5,6-dicarboxamid und 180 g Methylmethacrylat polymerisiert. Anschließend wurde das Polymere mit Hexan ausgefällt und danach getrocknet.

Eigenschaften des Produkts: VZ = 28, $T_g$ = 125°C.

Beispiel 4

Analog zu Beispiel 3 wurde eine Mischung aus 40 g N-Cyclohexyl-bicyclo-[2.2.1]-hept-5-en-5,6-dicarboxamid, 80 g Methylmethacrylat und 80 g Styrol polymerisiert. Anschließend wurde das Polymere mit Hexan ausgefällt und danach getrocknet.

Eigenschaften des Produkts: VZ = 29, $T_g$ = 131°C.

Vergleichsbeispiel 1

Analog zu Beispiel 1 wurden 200 g Methylmethacrylat in 1800 g Tetrahydrofuran in Gegenwart von 0,2 g Didodecanoylperoxid und 0,1 g t-Butylperpivalat polymerisiert.

Eigenschaften des Produkts: VZ = 31, $T_g$ = 109°C.

Vergleichsbeispiel 2

Analog zu Vergleichsbeispiel 2 wurden 100 g Methylmethacrylat und 100 g Styrol in 1800 g Tetrahydrofuran in Gegenwart von 0,2 g Didodecanoylperoxid und 0,1 g t-Butylperpivalat polymerisiert.

Eigenschaften des Produkts: VZ = 26, $T_g$ = 101°C.

Herstellung der imidierten Copolymerisate II

Beispiel 5

In einem Reaktionsgefäß mit Füllkörperkolonne wurde eine Mischung aus 10 g des Copolymerisats aus Beispiel 1, 10 g Cyclohexylamin und 80 g N-Methylpyrrolidon unter Stickstoff zum Sieden erhitzt. Nach etwa 1 h konnte Methanol am Kopf der Kolonne abgenommen werden, wobei während der nächsten 6 h so verfahren wurde, daß die Temperatur am Kolonnenkopf nicht höher als 70°C betrug. Anschließend wurde das im Überschuß vorhandene Amin abdestilliert und das imidierte Copolymerisat in Methanol ausgefällt und anschließend getrocknet.

Die Charakterisierung des Produkts ist der Tabelle zu entnehmen.

Beispiele 6 bis 8, Vergleichsbeispiele 3 und 4

Analog zu Beispiel 5 wurden 10 g eines Copolymerisats bzw. Polymerisats (aus den Beispielen 2 bis 4 und den Vergleichsbeispielen 1 und 2) mit jeweils 10 g Cyclohexylamin umgesetzt. Anschließend wurde das erhaltene Produkt wie oben angegeben aufgearbeitet.

Die Charakterisierung der Produkte ist der Tabelle zu entnehmen.

Tabelle

Charakterisierung der Produkte aus den Beispielen 5 bis 8 und den Vergleichsbeispielen 3 und 4

| Beispiel | $M_1$ [1) ] (Gew.-%) | $M_2$ [2) ] (Gew.-%) | MMA (Gew.-%) | St (Gew.-%) | N-Gehalt [3) ] (%) | $T_g$ (°C) |
|---|---|---|---|---|---|---|
| 5 | 10 | - | 90 | - | 4,9 | 197 |
| 6 | 20 | - | 40 | 40 | 2,1 | 193 |
| 7 | - | 10 | 90 | - | 4,6 | 188 |
| 8 | - | 20 | 40 | 40 | 1,9 | 168 |
| Vergleichsbeispiele | | | | | | |
| 3 | - | - | 100 | - | 5,0 | 171 |
| 4 | - | - | 50 | 50 | 2,2 | 141 |

1) $M_1$ = N-Phenyl-bicyclo-[2,2,1]-hept-2-en-5,6-dicarboxamid

2) $M_2$ = N-Cyclohexyl-bicyclo-[2,2,1]-hept-2-en-5,6-dicarboxamid

3) N-Gehalt aus Elementaranalyse nach der Imidierung

## Patentansprüche

1. Copolymerisate, erhältlich durch

(I) Copolymerisation eines Monomerengemisches aus

(A)1 bis 98 Gew.-% eines Monomeren der allgemeinen Formel I

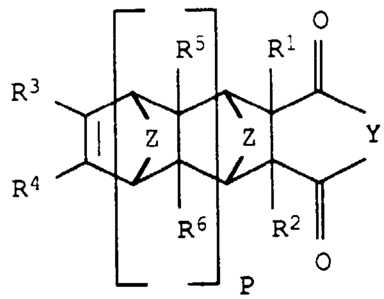

I

in der die Variablen folgende Bedeutung haben:

$R^1$ bis $R^6$ Wasserstoff, $C_1$-$C_{10}$-Alkyl, $C_1$-$C_{10}$-Alkoxy, wobei in den Alkyl- oder Alkoxyresten mit mehr als einem Kohlenstoffatom jeweils zwischen zwei Kohlenstoffatomen ein Sauerstoffatom eingefügt sein kann, $C_5$-$C_8$-Cycloalkyl, $C_6$-$C_{10}$-Aryl, $C_6$-$C_{10}$-Aryl-$C_1$-$C_{10}$-alkyl, $C_6$-$C_{10}$-Aryloxy, wobei die Arylgruppen bis zu drei $C_1$-$C_{10}$-Alkylgruppen tragen können, Cyano, Halogen, -CO-O-$R^7$, -O-CO-$R^7$, -CO-N$R^7R^8$, wobei

$R^7$, $R^8$ Wasserstoff, $C_1$-$C_{10}$-Alkyl, $C_5$-$C_8$-Cycloalkyl, $C_6$-$C_{10}$-Aryl, $C_6$-$C_{10}$-Aryl-$C_1$-$C_{10}$-alkyl, wobei die Arylgruppen bis zu drei $C_1$-$C_{10}$-Alkylgruppen tragen können, bedeuten;

p 0, 1 oder 2;

Z -$CH_2$-, Sauerstoff oder Schwefel, wobei für $p > 0$ die Reste Z gleich oder verschieden sein können;

Y Sauerstoff oder -N-$R^9$, wobei

$R^9$ Wasserstoff, $C_1$-$C_{22}$-Alkyl, $C_5$-$C_{12}$-Cycloalkyl, $C_6$-$C_{10}$-Aryl oder $C_6$-$C_{10}$-Aryl-$C_1$-$C_{10}$-alkyl bedeutet, wobei diese Reste, mit Ausnahme von Wasserstoff und $C_1$-$C_{22}$-Alkyl, bis zu dreifach mit Resten, ausgewählt aus der Gruppe bestehend aus $C_1$-$C_4$-Alkyl, $C_1$-$C_4$-Alkoxy und Halogen, substituiert sein können;

(B) 1 bis 98 Gew.-% mindestens einer Verbindung ausgewählt aus der Gruppe bestehend aus Acryl- und Methacrylsäure und Estern der Acryl- und Methacrylsäure der allgemeinen Formel II

$$CH_2{=}C\,(R^{10})\text{-}COOR^9 \qquad \text{II}$$

in der $R^{10}$ Wasserstoff oder Methyl bedeutet,
und

(C) 0 bis 98 Gew.-% mindestens eines weiteren copolymerisierbaren Monomeren,
und

(II) Umsetzung der so erhaltenen Copolymerisate mit einer Verbindung der allgemeinen Formel III

$$R^{11}NH_2 \qquad III$$

in der $R^{11}$ Wasserstoff, $C_1$-$C_{22}$-Alkyl, $C_5$-$C_8$-Cycloalkyl, $C_6$-$C_{10}$-Aryl oder $C_6$-$C_{10}$-Aryl-$C_1$-$C_4$-alkyl bedeutet, wobei diese Reste, mit Ausnahme von Wasserstoff und der $C_1$-$C_{22}$-Alkyl-Reste, bis zu dreifach mit Resten, ausgewählt aus der Gruppe bestehend aus $C_1$-$C_4$-Alkyl, $C_1$-$C_4$-Alkoxy und Halogen, substituiert sein können, oder Mischungen davon.

**2.** Verfahren zur Herstellung von Copolymerisaten gemäß Anspruch 1, dadurch gekennzeichnet, daß man

(I) ein Monomerengemisch aus

(A) 1 bis 98 Gew.-% eines Monomeren der allgemeinen Formel I

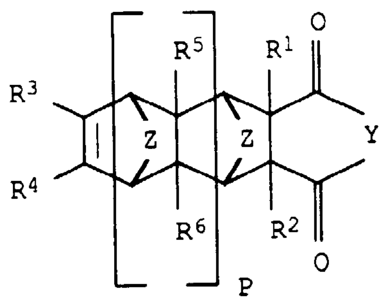

I

in der die Variablen folgende Bedeutung haben:

$R^1$ bis $R^6$ Wasserstoff, $C_1$-$C_{10}$-Alkyl, $C_1$-$C_{10}$-Alkoxy, wobei in den Alkyl- oder Alkoxyresten mit mehr als einem Kohlenstoffatom jeweils zwischen zwei Kohlenstoffatomen ein Sauerstoffatom eingefügt sein kann, $C_5$-$C_8$-Cycloalkyl, $C_6$-$C_{10}$-Aryl, $C_6$-$C_{10}$-Aryl-$C_1$-$C_{10}$-alkyl, $C_6$-$C_{10}$-Aryloxy, wobei die Arylgruppen bis zu drei $C_1$-$C_{10}$-Alkylgruppen tragen können, Cyano, Halogen, -CO-O-$R^7$, -O-CO-$R^7$, -CO-N$R^7R^8$, wobei

$R^7$, $R^8$ Wasserstoff, $C_1$-$C_{10}$-Alkyl, $C_5$-$C_8$-Cycloalkyl, $C_6$-$C_{10}$-Aryl, $C_6$-$C_{10}$-Aryl-$C_1$-$C_{10}$-alkyl, wobei die Arylgruppen bis zu drei $C_1$-$C_{10}$-Alkylgruppen tragen können, bedeuten;

p 0, 1 oder 2;

Z -$CH_2$-, Sauerstoff oder Schwefel, wobei für $p > 0$ die Reste Z gleich oder verschieden sein können;

Y Sauerstoff oder -N-$R^9$, wobei

$R^9$ Wasserstoff, $C_1$-$C_{22}$-Alkyl, $C_5$-$C_{12}$-Cycloalkyl, $C_6$-$C_{10}$-Aryl oder $C_6$-$C_{10}$-Aryl-$C_1$-$C_{10}$-alkyl bedeutet, wobei diese Reste, mit Ausnahme von Wasserstoff und $C_1$-$C_{22}$-Alkyl, bis zu dreifach mit Resten, ausgewählt aus der Gruppe bestehend aus $C_1$-$C_4$-Alkyl, $C_1$-$C_4$-Alkoxy und Halogen, substituiert sein können;

(B) 1 bis 98 Gew.-% mindestens einer Verbindung ausgewählt aus der Gruppe bestehend aus Acryl- und Methacrylsäure und Estern der Acryl- und Methacrylsäure der allgemeinen Formel II

$$CH_2=C(R^{10})\text{-}COOR^9 \qquad II$$

in der $R^{10}$ Wasserstoff oder Methyl bedeutet,
und

(C) 0 bis 98 Gew.-% mindestens eines weiteren copolymerisierbaren Monomeren,der Polymerisation zuführt,
und

(II) die so erhaltenen Copolymerisate mit einer Verbindung der allgemeinen Formel III

$$R^{11}NH_2 \qquad III$$

in der $R^{11}$ Wasserstoff, $C_1$-$C_{22}$-Alkyl, $C_5$-$C_8$-Cycloalkyl, $C_6$-$C_{10}$-Aryl oder $C_6$-$C_{10}$-Aryl-$C_1$-$C_4$-alkyl bedeutet, wobei diese Reste, mit Ausnahme von Wasserstoff und der $C_1$-$C_{22}$-Alkyl-Reste, bis zu dreifach mit Resten, ausgewählt aus der Gruppe bestehend aus $C_1$-$C_4$-Alkyl, $C_1$-$C_4$-Alkoxy und Halogen, substituiert sein können, oder Mischungen davon,
zur Reaktion bringt.

**3.** Homopolymere bzw. statistische Copolymere aus

a) 1 bis 100 Gew.-% mindestens eines Monomeren der allgemeinen Formel I

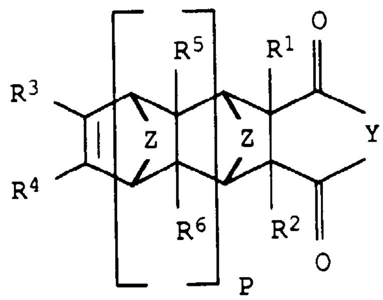

I

in der die Variablen folgende Bedeutung haben:

$R^1$ bis $R^6$ Wasserstoff, $C_1$-$C_{10}$-Alkyl, $C_1$-$C_{10}$-Alkoxy, wobei in den Alkyl- oder Alkoxyresten mit mehr als einem Kohlenstoffatom jeweils zwischen zwei Kohlenstoffatomen ein Sauerstoffatom eingefügt sein kann, $C_5$-$C_8$-Cycloalkyl, $C_6$-$C_{10}$-Aryl, $C_6$-$C_{10}$-Aryl-$C_1$-$C_{10}$-alkyl, $C_6$-$C_{10}$-Aryloxy, wobei die Arylgruppen bis zu drei $C_1$-$C_{10}$-Alkylgruppen tragen können, Cyano, Halogen, -CO-O-$R^7$, -O-CO-$R^7$, -CO-N$R^7R^8$, wobei

$R^7$, $R^8$ Wasserstoff, $C_1$-$C_{10}$-Alkyl, $C_5$-$C_8$-Cycloalkyl, $C_6$-$C_{10}$-Aryl, $C_6$-$C_{10}$-Aryl-$C_1$-$C_{10}$-alkyl, wobei die Arylgruppen bis zu drei $C_1$-$C_{10}$-Alkylgruppen tragen können, bedeuten;

p 0, 1 oder 2;

Z $-CH_2-$, Sauerstoff oder Schwefel, wobei für $p > 0$ die Reste Z gleich oder verschieden sein können;

Y Sauerstoff oder -N-$R^9$, wobei

$R^9$ Wasserstoff, $C_1$-$C_{22}$-Alkyl, $C_5$-$C_{12}$-Cycloalkyl, $C_6$-$C_{10}$-Aryl oder $C_6$-$C_{10}$-Aryl-$C_1$-$C_{10}$-alkyl bedeutet, wobei diese Reste, mit Ausnahme von Wasserstoff und $C_1$-$C_{22}$-Alkyl, bis zu dreifach mit Resten, ausgewählt aus der Gruppe bestehend aus $C_1$-$C_4$-Alkyl, $C_1$-$C_4$-Alkoxy und Halogen, substituiert sein können,

b) 0 bis 99 Gew.-% mindestens einer Verbindung ausgewählt aus der Gruppe bestehend aus Acryl- und Methacrylsäure und Estern der Acryl- und Methacrylsäure der allgemeinen Formel II

$$CH_2{=}C(R^{10})\text{-}COOR^9 \qquad II$$

in der $R^{10}$ Wasserstoff oder Methyl bedeutet, und

c) 0 bis 99 Gew.-% mindestens eines weiteren copolymerisierbaren Monomeren, mit der Maßgabe, daß, falls Y Sauerstoff bedeutet und Z für Sauerstoff oder Schwefel steht, p nicht Null ist.

**4.** Verfahren zur Herstellung von Homopolymeren bzw. statistischen Copolymeren gemäß Anspruch 1, dadurch gekennzeichnet, daß man

a) 1 bis 100 Gew.-% mindestens eines Monomeren der allgemeinen Formel I

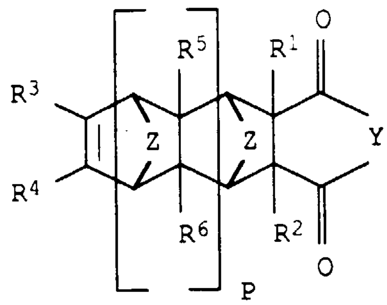

I

in der die Variablen folgende Bedeutung haben:

$R^1$ bis $R^6$ Wasserstoff, $C_1$-$C_{10}$-Alkyl, $C_1$-$C_{10}$-Alkoxy, wobei in den Alkyl- oder Alkoxyresten mit mehr als einem Kohlenstoffatom jeweils zwischen zwei Kohlenstoffatomen ein Sauerstoffatom eingefügt sein kann, $C_5$-$C_8$-Cycloalkyl, $C_6$-$C_{10}$-Aryl, $C_6$-$C_{10}$-Aryl-$C_1$-$C_{10}$-alkyl, $C_6$-$C_{10}$-Aryloxy, wobei die Arylgruppen bis zu drei $C_1$-$C_{10}$-Alkylgruppen tragen können, Cyano, Halogen, -CO-O-$R^7$, -O-CO-$R^7$, -CO-N$R^7R^8$, wobei

$R^7$, $R^8$ Wasserstoff, $C_1$-$C_{10}$-Alkyl, $C_5$-$C_8$-Cycloalkyl, $C_6$-$C_{10}$-Aryl, $C_6$-$C_{10}$-Aryl-$C_1$-$C_{10}$-alkyl, wobei die Arylgruppen bis zu drei $C_1$-$C_{10}$-Alkylgruppen tragen können, bedeuten;

p 0, 1 oder 2;

Z $-CH_2-$, Sauerstoff oder Schwefel, wobei für $p > 0$ die Reste Z gleich oder verschieden sein können;

Y Sauerstoff oder -N-$R^9$, wobei

$R^9$ Wasserstoff, $C_1$-$C_{22}$-Alkyl, $C_5$-$C_{12}$-Cycloalkyl, $C_6$-$C_{10}$-Aryl oder $C_6$-$C_{10}$-Aryl-$C_1$-$C_{10}$-alkyl bedeutet, wobei diese Reste, mit Ausnahme von Wasserstoff und $C_1$-$C_{22}$-Alkyl, bis zu dreifach mit Resten, ausgewählt aus der Gruppe bestehend aus $C_1$-$C_4$-Alkyl, $C_1$-$C_4$-Alkoxy und Halogen, substituiert sein können,

b) 0 bis 99 Gew.-% mindestens einer Verbindung ausgewählt aus der Gruppe bestehend aus Acryl- und Methacrylsäure und Estern der Acryl- und Methacrylsäure der allgemeinen Formel II

$$CH_2{=}C(R^{10})\text{-}COOR^9 \qquad II$$

in der $R^{10}$ Wasserstoff oder Methyl bedeutet,

und

c) 0 bis 99 Gew.-% mindestens eines weiteren copolymerisierbaren Monomeren,

der Polymerisation zuführt, mit der Maßgabe, daß, falls Y Sauerstoff bedeutet und Z für Sauerstoff oder Schwefel steht, p nicht Null ist.

**5.** Verwendung der Polymerisate gemäß den Ansprüchen 1 bis 4 zur Herstellung von Formkörpern, Folien oder Fasern.

**6.** Formkörper, Folien oder Fasern, hergestellt aus Polymerisaten gemäß einem der Ansprüche 1 und 3 oder wie gemäß einem der Ansprüche 2 und 4 erhalten.

## Claims

**1.** A copolymer obtainable by

(I) copolymerizing a monomer mixture comprising

(A) 1 to 98% by weight of a monomer of the formula I

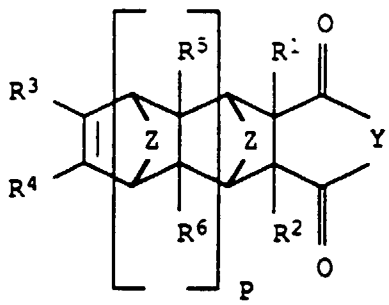

I

where:

| | |
|---|---|
| $R^1$ to $R^6$ | are hydrogen, $C_1$-$C_{10}$-alkyl, $C_1$-$C_{10}$-alkoxy, it being possible in the alkyl or alkoxy radicals having more than one carbon atom for an oxygen atom to be inserted in each case between two carbon atoms, $C_5$-$C_8$-cycloalkyl, $C_6$-$C_{10}$-aryl, $C_6$-$C_{10}$-aryl-$C_1$-$C_{10}$-alkyl, $C_6$-$C_{10}$-aryloxy, the aryl groups being able to carry up to three $C_1$-$C_{10}$-alkyl groups, cyano, halogen, -CO-O-$R^7$, -O-CO-$R^7$ or -CO-$NR^7R^8$, where |
| $R^7$ and $R^8$ | are hydrogen, $C_1$-$C_{10}$-alkyl, $C_5$-$C_8$-cycloalkyl, $C_6$-$C_{10}$-aryl or $C_6$-$C_{10}$-aryl-$C_1$-$C_{10}$-alkyl, the aryl groups being able to carry up to three $C_1$-$C_{10}$-alkyl groups; |
| p | is 0, 1 or 2; |
| Z | is -$CH_2$-, oxygen or sulfur, the radicals Z being identical or different in the case $p > 0$; |
| Y | is oxygen or -N-$R^9$, where |

$R^9$ is hydrogen, $C_1$-$C_{22}$-alkyl, $C_5$-$C_{12}$-cycloalkyl, $C_6$-$C_{10}$-aryl or $C_6$-$C_{10}$-aryl-$C_1$-$C_{10}$-alkyl, it being possible for these radicals, with the exception of hydrogen and $C_1$-$C_{22}$-alkyl, to be mono- to trisubstituted by radicals selected from the group comprising $C_1$-$C_4$-alkyl, $C_1$-$C_4$-alkoxy and halogen;

(B) 1 to 98% by weight of at least one compound selected from the group comprising acrylic and methacrylic acid and esters of the acrylic and methacrylic acid of the formula II

$$CH_2=C(R^{10})\text{-}COOR^9 \qquad II$$

where $R^{10}$ is hydrogen or methyl,
and
(C) 0 to 98% by weight of at least one further copolymerizable monomer,

and
(II) reacting the thus obtained copolymer with a compound of the formula III

$$R^{11}NH_2 \qquad III$$

where $R^{11}$ is hydrogen, $C_1$-$C_{22}$-alkyl, $C_5$-$C_8$-cycloalkyl, $C_6$-$C_{10}$-aryl or $C_6$-$C_{10}$-aryl-$C_1$-$C_4$-alkyl, it being possible for these radicals, with the exception of hydrogen and the $C_1$-$C_{22}$-alkyl radicals, to be mono-to trisubstituted by radicals selected from the group comprising $C_1$-$C_4$-alkyl, $C_1$-$C_4$-alkoxy and halogen, or a mixture thereof.

**2.** A process for preparing a copolymer as claimed in claim 1, which comprises

(I) polymerizing a monomer mixture comprising

(A) 1 to 98% by weight of a monomer of the formula I

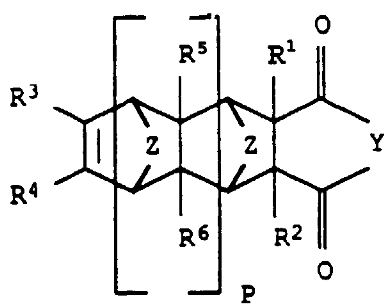

I

| | |
|---|---|
| $R^1$ to $R^6$ | are hydrogen, $C_1$-$C_{10}$-alkyl, $C_1$-$C_{10}$-alkoxy, it being possible in the alkyl or alkoxy radicals having more than one carbon atom for an oxygen atom to be inserted in each case between two carbon atoms, $C_5$-$C_8$-cycloaykyl, $C_6$-$C_{10}$-aryl, $C_6$-$C_{10}$-aryl-$C_1$-$C_{10}$-alkyl, $C_6$-$C_{10}$-aryloxy, the aryl groups being able to carry up to three $C_1$-$C_{10}$-alkyl groups, cyano, halogen, -CO-O-$R^7$, -O-CO-$R^7$ or -CO-$NR^7R^8$, where |
| $R^7$ and $R^8$ | are hydrogen, $C_1$-$C_{10}$-alkyl, $C_5$-$C_8$-cycloalkyl, $C_6$-$C_{10}$-aryl or $C_6$-$C_{10}$-aryl-$C_1$-$C_{10}$-alkyl, the aryl groups being able to carry up to three $C_1$-$C_{10}$-alkyl groups; |
| p | is 0, 1 or 2; |
| Z | is -$CH_2$-, oxygen or sulfur, the radicals Z being identical or different in the case $p > 0$; |
| Y | is oxygen or -N-$R^9$, where |

$R^9$ is hydrogen, $C_1$-$C_{22}$-alkyl, $C_5$-$C_{12}$-cycloalkyl, $C_6$-$C_{10}$-aryl or $C_6$-$C_{10}$-aryl-$C_1$-$C_{10}$-alkyl, it being possible for these radicals, with the exception of hydrogen and $C_1$-$C_{22}$-alkyl, to be mono- to trisubstituted by radicals selected from the group comprising $C_1$-$C_4$-alkyl, $C_1$-$C_4$-alkoxy and halogen;

(B) 1 to 98% by weight of at least one compound selected from the group comprising acrylic and methacrylic acid and esters of the acrylic and methacrylic acid of the formula II

$$CH_2=C(R^{10})\text{-}COOR^9 \qquad II$$

where $R^{10}$ is hydrogen or methyl,
and
(C) 0 to 98% by weight of at least one further copolymerizable monomer,

and
(II) reacting the thus obtained copolymer with a compound of the formula III

$$R^{11}NH_2 \qquad III$$

where $R^{11}$ is hydrogen, $C_1$-$C_{22}$-alkyl, $C_5$-$C_8$-cycloalkyl, $C_6$-$C_{10}$-aryl or $C_6$-$C_{10}$-aryl-$C_1$-$C_4$-alkyl, it being possible for these radicals, with the exception of hydrogen and the $C_1$-$C_{22}$-alkyl radicals, to be mono-to trisubstituted by radicals selected from the group comprising $C_1$-$C_4$-alkyl, $C_1$-$C_4$-alkoxy and halogen, or a mixture thereof.

**3.** A homopolymer or random copolymer comprising

a) 1 to 100% by weight of at least one monomer of the formula I

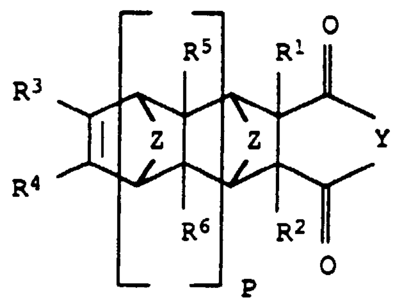

I

where :

$R^1$ to $R^6$ are hydrogen, $C_1$-$C_{10}$-alkyl, $C_1$-$C_{10}$-alkoxy, it being possible in the alkyl or alkoxy radicals having more than one carbon atom for an oxygen atom to be inserted in each case between two carbon atoms, $C_5$-$C_8$-cyclalkyl, $C_6$-$C_{10}$-aryl, $C_6$-$C_{10}$-aryl-$C_1$-$C_{10}$-alkyl, $C_6$-$C_{10}$-aryloxy, the aryl groups being able to carry up to three $C_1$-$C_{10}$-alkyl groups, cyano, halogen, -CO-O-$R^7$, -O-CO-$R^7$ or -CO-N$R^7R^8$, where

$R^7$ and $R^8$ are hydrogen, $C_1$-$C_{10}$-alkyl, $C_5$-$C_8$-cyclo-alkyl, $C_6$-$C_{10}$-aryl or $C_6$-$C_{10}$-aryl-$C_1$-$C_{10}$-alkyl, the aryl groups being able to carry up to three $C_1$-$C_{10}$-alkyl groups;

p is 0, 1 or 2;

Z is -$CH_2$-, oxygen or sulfur, the radicals Z being identical or different in the case $p > 0$;

Y is oxygen or -N-$R^9$, where

$R^9$ is hydrogen, $C_1$-$C_{22}$-alkyl, $C_5$-$C_{12}$-cycloalkyl, $C_6$-$C_{10}$-aryl or $C_6$-$C_{10}$-aryl-$C_1$-$C_{10}$-alkyl, it being possible for these radicals, with the exception of hydrogen and $C_1$-$C_{22}$-alkyl, to be mono-to trisubstituted by radicals selected from the group comprising $C_1$-$C_4$-alkyl, $C_1$-$C_4$-alkoxy and halogen;

b) 0 to 99% by weight of at least one compound selected from the group comprising acrylic and methacrylic acid and esters of the acrylic and methacrylic acid of the formula II

$$CH_2{=}C(R^{10})\text{-}COOR^9 \qquad II$$

where $R^{10}$ is hydrogen or methyl,
and
c) 0 to 99% by weight of at least one further copolymerizable monomer,

with the proviso that, if Y is oxygen and Z is oxygen or sulfur, p is not zero.

**4.** A process for preparing a homopolymer or random copolymer as claimed in claim 3, which comprises polymerizing

a) 1 to 100% bv weight of at least one monomer of the formula I

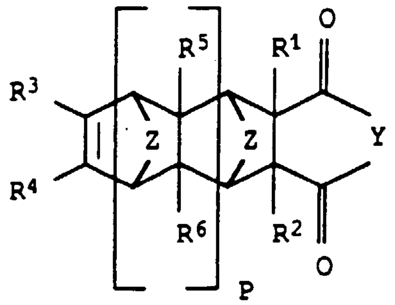

I

where:

$R^1$ to $R^6$ are hydrogen, $C_1$-$C_{10}$-alkyl, $C_1$-$C_{10}$-alkoxy, it being possible in the alkyl or alkoxy radicals having more than one carbon atom for an oxygen atom to be inserted in each case between two carbon atoms, $C_5$-$C_8$-cycloalkyl, $C_6$-$C_{10}$-aryl, $C_6$-$C_{10}$-aryl-$C_1$-$C_{10}$-alkyl, $C_6$-$C_{10}$-aryloxy, the aryl groups being able to carry up to three $C_1$-$C_{10}$-alkyl groups, cyano, halogen, -CO-O-$R^7$, -O-CO-$R^7$ or -CO-$NR^7R^8$, where

$R^7$ and $R^8$ are hydrogen, $C_1$-$C_{10}$-alkyl, $C_5$-$C_8$-cycloalkyl, $C_6$-$C_{10}$-aryl or $C_6$-$C_{10}$-aryl-$C_1$-$C_{10}$-alkyl, the aryl groups being able to carry up to three $C_1$-$C_{10}$-alkyl groups;

p is 0, 1 or 2;

Z is -$CH_2$-, oxygen or sulfur, the radicals Z being identical or different in the case p > 0;

Y is oxygen or -N-$R^9$, where

$R^9$ is hydrogen, $C_1$-$C_{22}$-alkyl, $C_5$-$C_{12}$-cycloalkyl, $C_6$-$C_{10}$-aryl or $C_6$-$C_{10}$-aryl-$C_1$-$C_{10}$-alkyl, it being possible for these radicals, with the exception of hydrogen and $C_1$-$C_{22}$-alkyl, to be mono- to trisubstituted by radicals selected from the group comprising $C_1$-$C_4$-alkyl, $C_1$-$C_4$-alkoxy and halogen;

b) 0 to 99% by weight of at least one compound selected from the group comprising acrylic and methacrylic acid and esters of the acrylic and methacrylic acid of the formula II

$$CH_2{=}C(R^{10})\text{-}COOR^9 \qquad II$$

where $R^{10}$ is hydrogen or methyl,
and
c) 0 to 99% by weight of at least one further copolymerizable monomer,

with the proviso that, if Y is oxygen and Z is oxygen or sulfur, p is not zero.

**5.** The use of a polymer as claimed in claim 1 or 2 or 3 or 4 for producing molded articles, films or fibers.

**6.** A molded article, film or fiber produced from a polymer as claimed in one of claims 1 and 3 or obtained as claimed in one of claims 2 and 4.

**Revendications**

**1.** Copolymères que l'on obtient par

(I) copolymérisation d'un mélange de monomères constitué par

(A) de 1 à 98% en poids d'un monomère répondant à la formule générale I

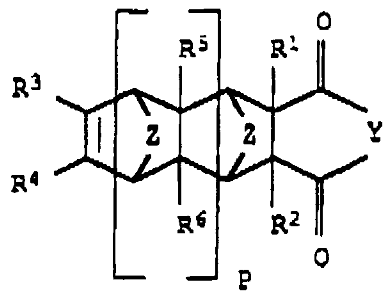

I

dans laquelle les variables ont la signification ci-après :

$R^1$ à $R^6$ représentent un atome d'hydrogène, un groupe alkyle en $C_1$-$C_{10}$, un groupe alcoxy en $C_1$-$C_{10}$, dans lesquels, dans les radicaux alkyle ou alcoxy contenant plus d'un atome de carbone, peut être inséré respectivement un atome d'oxygène entre deux atomes de carbone; un groupe cycloalkyle en $C_5$-$C_8$, un groupe aryle en $C_6$-$C_{10}$, un groupe aryl(en $C_6$-$C_{10}$)alkyle en $C_1$-$C_{10}$, un groupe aryl(en $C_6$-$C_{10}$)oxy, les groupes aryle pouvant porter jusqu'à trois groupes alkyle en $C_1$-$C_{10}$; un groupe cyano, un atome d'halogène, -CO-O-$R^7$, -O-CO-$R^7$, -CO-N$R^7$-$R^8$ où

$R^7$, $R^8$ représentent un atome d'hydrogène, un groupe alkyle en $C_1$-$C_{10}$, un groupe cycloalkyle en $C_5$-$C_8$, un groupe aryle en $C_6$-$C_{10}$, un groupe aryl(en $C_6$-$C_{10}$)alkyle en $C_1$-$C_{10}$, dans lesquels les groupes aryle peuvent porter jusqu'à trois groupes alkyle en $C_1$-$C_{10}$;

p représente 0, 1 ou 2;

Z représente -$CH_2$-, un atome d'oxygène ou un atome de soufre, dans lequel, pour $p > 0$, les radicaux Z peuvent être identiques ou différents;

Y représente un atome d'oxygène ou -N-$R^9$ où

$R^9$ représente un atome d'hydrogène, un groupe alkyle en $C_1$-$C_{22}$, un groupe cycloalkyle en $C_5$-$C_{12}$, un groupe aryle en $C_6$-$C_{10}$ ou un groupe aryl(en $C_6$-$C_{10}$)alkyle en $C_1$-$C_{10}$, dans lesquels ces radicaux, à l'exception de l'atome d'hydrogène et du groupe alkyle en $C_1$-$C_{22}$, peuvent être substitués jusqu'à trois fois avec des radicaux choisis parmi le groupe constitué par un groupe alkyle en $C_1$-$C_4$, un groupe alcoxy en $C_1$-$C_4$ et un atome d'halogène;

(B) de 1 à 98% en poids d'au moins un composé choisi parmi le groupe constitué par l'acide acrylique et méthacrylique et des esters d'acide acrylique et méthacrylique répondant à la formule générale II

$$CH_2\text{-}C(R^{10})\text{-}COOR^9 \qquad \text{II}$$

dans laquelle $R^{10}$ représente un atome d'hydrogène ou un groupe méthyle,

(C) de 0 à 98% en poids d'au moins un autre monomère copolymérisable, et

(II) mise en réaction des copolymères ainsi obtenus avec un composé répondant à la formule générale III

$$R^{11}NH_2 \qquad III$$

dans laquelle $R^{11}$ représente un atome d'hydrogène, un groupe alkyle en $C_1$-$C_{22}$, un groupe cycloalkyle en $C_5$-$C_8$, un groupe aryle en $C_6$-$C_{10}$ ou un groupe aryl(en $C_6$-$C_{10}$)alkyle en $C_1$-$C_4$, ces radicaux, à l'exception de l'atome d'hydrogène et des radicaux alkyle en $C_1$-$C_{22}$, pouvant être substitués jusqu'à trois fois avec des radicaux choisis parmi le groupe constitué par un groupe alkyle en $C_1$-$C_4$, un groupe alcoxy en $C_1$-$C_4$ et un atome d'halogène, ou avec des mélanges de ces composés.

**2.** Procédé pour la préparation de copolymères selon la revendication 1, caractérisé en ce que

(I) on polymérise un mélange de monomères constitué par

(A) de 1 à 98% en poids d'un monomère répondant à la formule générale I

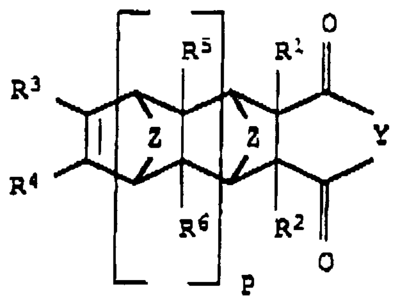

I

dans laquelle les variables ont la signification ci-après :

$R^1$ à $R^6$ représentent un atome d'hydrogène, un groupe alkyle en $C_1$-$C_{10}$, un groupe alcoxy en $C_1$-$C_{10}$, dans lesquels, dans les radicaux alkyle ou alcoxy contenant plus d'un atome de carbone, peut être inséré respectivement un atome d'oxygène entre deux atomes de carbone; un groupe cycloalkyle en $C_5$-$C_8$, un groupe aryle en $C_6$-$C_{10}$, un groupe aryl(en $C_6$-$C_{10}$)alkyle en $C_1$-$C_{10}$, un groupe aryl(en $C_6$-$C_{10}$)oxy, les groupes aryle pouvant porter jusqu'à trois groupes alkyle en $C_1$-$C_{10}$; un groupe cyano, un atome d'halogène, $-CO-O-R^7$, $-O-CO-R^7$, $-CO-NR^7-R^8$ où

$R^7$, $R^8$ représentent un atome d'hydrogène, un groupe alkyle en $C_1$-$C_{10}$, un groupe cycloalkyle en $C_5$-$C_8$, un groupe aryle en $C_6$-$C_{10}$, un groupe aryl(en $C_6$-$C_{10}$)alkyle en $C_1$-$C_{10}$, dans lesquels les groupes aryle peuvent porter jusqu'à trois groupes alkyle en $C_1$-$C_{10}$;

p représente 0, 1 ou 2;

Z représente $-CH_2-$, un atome d'oxygène ou un atome de soufre, dans lequel, pour $p > 0$, les radicaux Z peuvent être identiques ou différents;

Y représente un atome d'oxygène ou $-N-R^9$ où

$R^9$ représente un atome d'hydrogène, un groupe alkyle en $C_1$-$C_{22}$, un groupe cycloalkyle en $C_5$-$C_{12}$, un groupe aryle en $C_6$-$C_{10}$ ou un groupe aryl(en $C_6$-$C_{10}$)alkyle en $C_1$-$C_{10}$, dans lesquels ces radicaux, à l'exception de l'atome d'hydrogène et du groupe alkyle en $C_1$-$C_{22}$, peuvent être substitués jusqu'à trois fois avec des radicaux choisis parmi le groupe constitué par un groupe alkyle en $C_1$-$C_4$, un groupe alcoxy en $C_1$-$C_4$ et un atome d'halogène;

(B) de 1 à 98% en poids d'au moins un composé choisi parmi le groupe constitué par l'acide acrylique et méthacrylique et des esters d'acide acrylique et méthacrylique répondant à la formule générale II

$$CH_2\text{-}C(R^{10})\text{-}COOR^9 \qquad II$$

dans laquelle $R^{10}$ représente un atome d'hydrogène ou un groupe méthyle,

(C) de 0 à 98% en poids d'au moins un autre monomère copolymérisable, et

(II) on amène à réagir les copolymères ainsi obtenus avec un composé répondant à la formule générale III

$$R^{11}NH_2 \qquad III$$

dans laquelle $R^{11}$ représente un atome d'hydrogène, un groupe alkyle en $C_1$-$C_{22}$, un groupe cycloalkyle en $C_5$-$C_8$, un groupe aryle en $C_6$-$C_{10}$ ou un groupe aryl(en $C_6$-$C_{10}$)alkyle en $C_1$-$C_4$, ces radicaux, à l'exception de l'atome d'hydrogène et des radicaux alkyle en $C_1$-$C_{22}$, pouvant être substitués jusqu'à trois fois avec des radicaux choisis parmi le groupe constitué par un groupe alkyle en $C_1$-$C_4$, un groupe alcoxy en $C_1$-$C_4$ et un atome d'halogène, ou avec des mélanges de ces composés.

**3.** Homopolymères, respectivement copolymères statistiques constitués par

a) de 1 à 100% en poids d'au moins un monomère répondant à la formule générale I

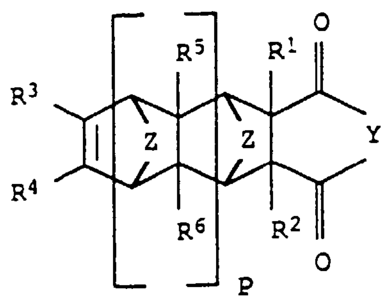

dans laquelle les variables ont la signification ci-après :

$R^1$ à $R^6$ représentent un atome d'hydrogène, un groupe alkyle en $C_1$-$C_{10}$, un groupe alcoxy en $C_1$-$C_{10}$, dans lesquels, dans les radicaux alkyle ou alcoxy contenant plus d'un atome de carbone, peut être inséré respectivement un atome d'oxygène entre deux atomes de carbone; un groupe cycloalkyle en $C_5$-$C_8$, un groupe aryle en $C_6$-$C_{10}$, un groupe aryl(en $C_6$-$C_{10}$)alkyle en $C_1$-$C_{10}$, un groupe aryl(en $C_6$-$C_{10}$)oxy, les groupes aryle pouvant porter jusqu'à trois groupes alkyle en $C_1$-$C_{10}$; un groupe cyano, un atome d'halogène, -CO-O-$R^7$, -O-CO-$R^7$, -CO-N$R^7$-$R^8$ où

$R^7$, $R^8$ représentent un atome d'hydrogène, un groupe alkyle en $C_1$-$C_{10}$, un groupe cycloalkyle en $C_5$-$C_8$, un groupe aryle en $C_6$-$C_{10}$, un groupe aryl(en $C_6$-$C_{10}$)alkyle en $C_1$-$C_{10}$, dans lesquels les groupes aryle peuvent porter jusqu'à trois groupes alkyle en $C_1$-$C_{10}$;

p représente 0, 1 ou 2;

Z représente -$CH_2$-, un atome d'oxygène ou un atome de soufre, dans lequel, pour $p > 0$, les radicaux Z peuvent être identiques ou différents;

Y représente un atome d'oxygène ou -N-$R^9$ où

$R^9$ représente un atome d'hydrogène, un groupe alkyle en $C_1$-$C_{22}$, un groupe cycloalkyle en $C_5$-$C_{12}$, un groupe aryle en $C_6$-$C_{10}$ ou un groupe aryl(en $C_6$-$C_{10}$)alkyle en $C_1$-$C_{10}$, dans lesquels ces radicaux, à l'exception de l'atome d'hydrogène et du groupe alkyle en $C_1$-$C_{22}$, peuvent être substitués jusqu'à trois fois avec des radicaux choisis parmi le groupe constitué par un groupe alkyle en $C_1$-$C_4$, un groupe alcoxy en $C_1$-$C_4$ et un atome d'halogène;

b) de 0 à 99% en poids d'au moins un composé choisi parmi le groupe constitué par l'acide acrylique et méthacrylique et des esters d'acide acrylique et méthacrylique répondant à la formule générale II

$$CH_2\text{-}C(R^{10})\text{-}COOR^9 \qquad II$$

dans laquelle $R^{10}$ représente un atome d'hydrogène ou un groupe méthyle, et

c) de 0 à 99% en poids d'au moins un autre monomère copolymérisable,
avec cette mesure que, au cas où Y représente un atome d'oxygène et Z représente un atome d'oxygène ou un atome de soufre, p n'est pas égal à zéro.

**4.** Procédé pour la préparation d'homopolymères, respectivement de copolymères statistiques selon la revendication 1, caractérisé en ce qu'on copolymérise

a) de 1 à 100% en poids d'au moins un monomère répondant à la formule générale I

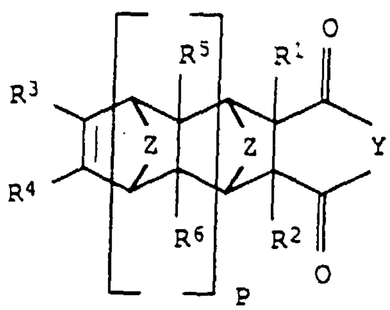

dans laquelle les variables ont la signification ci-après :

$R^1$ à $R^6$ représentent un atome d'hydrogène, un groupe alkyle en $C_1$-$C_{10}$, un groupe alcoxy en $C_1$-$C_{10}$, dans lesquels, dans les radicaux alkyle ou alcoxy contenant plus d'un atome de carbone, peut être inséré respectivement un atome d'oxygène entre deux atomes de carbone; un groupe cycloalkyle en $C_5$-$C_8$, un groupe aryle en $C_6$-$C_{10}$, un groupe aryl(en $C_6$-$C_{10}$)alkyle en $C_1$-$C_{10}$, un groupe aryl(en $C_6$-$C_{10}$)oxy, les groupes aryle pouvant porter jusqu'à trois groupes alkyle en $C_1$-$C_{10}$; un groupe cyano, un atome d'halogène, -CO-O-$R^7$, -O-CO-$R^7$, -CO-N$R^7$-$R^8$ où

$R^7$, $R^8$ représentent un atome d'hydrogène, un groupe alkyle en $C_1$-$C_{10}$, un groupe cycloalkyle en $C_5$-$C_8$, un groupe aryle en $C_6$-$C_{10}$, un groupe aryl(en $C_6$-$C_{10}$)alkyle en $C_1$-$C_{10}$, dans lesquels les groupes aryle peuvent porter jusqu'à trois groupes alkyle en $C_1$-$C_{10}$;

p représente 0, 1 ou 2;

Z représente -$CH_2$-, un atome d'oxygène ou un atome de soufre, dans lequel, pour $p > 0$, les radicaux Z peuvent être identiques ou différents;

Y représente un atome d'oxygène ou -N-$R^9$ où

$R^9$ représente un atome d'hydrogène, un groupe alkyle en $C_1$-$C_{22}$, un groupe cycloalkyle en $C_5$-$C_{12}$,

un groupe aryle en $C_6$-$C_{10}$ ou un groupe aryl(en $C_6$-$C_{10}$)alkyle en $C_1$-$C_{10}$-dans lesquels ces radicaux, à l'exception de l'atome d'hydrogène et du groupe alkyle en $C_1$-$C_{22}$, peuvent être substitués jusqu'à trois fois avec des radicaux choisis parmi le groupe constitué par un groupe alkyle en $C_1$-$C_4$, un groupe alcoxy en $C_1$-$C_4$ et un atome d'halogène;

b) de 0 à 99% en poids d'au moins un composé choisi parmi le groupe constitué par l'acide acrylique et méthacrylique et des esters d'acide acrylique et méthacrylique répondant à la formule générale II

$$CH_2\text{-}C(R^{10})\text{-}COOR^9 \qquad II$$

dans laquelle $R^{10}$ représente un atome d'hydrogène ou un groupe méthyle,
et

c) de 0 à 99% en poids d'au moins un autre monomère copolymérisable,
avec cette mesure que, au cas où Y représente un atome d'oxygène et Z représente un atome d'oxygène ou un atome de soufre, p n'est pas égal à zéro.

**5.** Utilisation des polymères selon l'une des revendications 1 à 4 pour la préparation de corps moulés, de feuilles ou de fibres.

**6.** Corps moulés, feuilles ou fibres préparés à partir de polymères selon l'une quelconque des revendications 1 et 3, ou que l'on obtient conformément à l'une quelconque des revendications 2 et 4.